# EUROPEAN PATENT APPLICATION

(11) **EP 2 348 346 A1**
(43) Date of publication of application: **27.07.2011**
(21) Application number: 11150534.3
(22) Date of filing: 11.01.2011
(51) Int. Cl.: G02B 7/04, G03B 21/14

(54) **Focus controlling device for a beam projector**

(30) Priority: 19.01.2010 KR 20100004953
(71) Applicant: SAMSUNG ELECTRONICS CO., LTD., Suwon-si Gyeonggi-do 442-742 (KR)
(72) Inventor: Park, Joong-Wan, 442-742, Gyeonggi-do (KR)
(74) Representative: Grünecker, Kinkeldey, Stockmair & Schwanhäusser Anwaltssozietät

(57) **Abstract**

A focus controlling device of a beam projector for use in a portable terminal. The focus controlling device includes a drive motor, a cam including a helical groove on an outer circumferential surface thereof, connected to the drive motor, and a projection lens barrel including a shaft that interworks with the helical groove to control focus by linearly sliding according to revolution of the cam.

## Description

### BACKGROUND OF THE INVENTION

### 1. Field of the Invention

The present invention relates generally to a small beam projector used in a portable terminal, and more particularly, to a focus controlling device for a small beam projector including in a portable terminal.

### 2. Description of the Related Art

The term "beam projector" generally refers to a device for implementing an image on a display device, transmitting light generated from an additional light source into a display device, and projecting the transmitted light on a screen to provide the image. The focus of the light transmitted through the display device can be adjusted based on a distance of the lens from a screen.

Such a beam projector can easily control a size of an image. However, as the image is magnified, the image quality deteriorates and the colors are not accurately depicted in some lighted areas. Some of these disadvantages have been overcome by recent technology for manufacturing the display device and the lens system.

Additionally, because the beam projector is an expensive device, it has been almost exclusively used in conferences, report presentations, assemblies, or public events in places such as a large conference room. Basically, beam projectors have not been used much by the typical consumer. However, a home beam projector has been recently commercialized, and with the development of information devices such as portable terminals, an effort has been made to commercialize a highly portable and miniaturized beam projector.

Image quality through the beam projector greatly depends on the quality of the display device, light source, and lens system. However, the quality of an image implemented through a pre-manufactured beam projector depends on an appropriate distance between a screen and a beam projector and the focus adjustment in an installation state.

There is a limitation in installing a focus controlling device in a miniaturized beam projector mounted in a portable terminal, for example, a cellular phone, or an easy-to-carry miniaturized beam projector to provide a clear image on the screen.

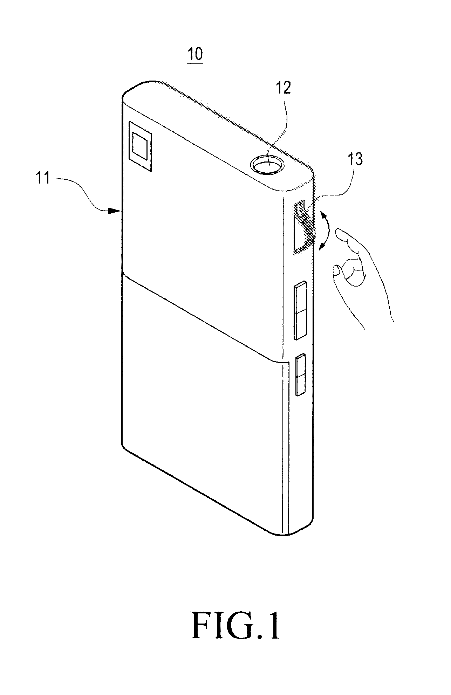

FIG. 1 is a perspective view illustrating a beam projector and a manual focus controlling device used in a conventional portable terminal.

Referring to FIG. 1, when the beam projector is included in the portable terminal 10, it is usually mounted on an upper portion at a corner of a main body 11 and thus, the focus controlling device is also mounted around the upper portion of the main body 11. Reference numeral 12 denotes a lens window.

In particular, when the focus controlling device is manually mounted, a knob 13 for manually controlling the focus of a lens is partially exposed to be rotated by using a finger.

However, because the focus controlling device for the beam projector in the conventional portable terminal is mounted on the upper portion of the main body 11, it imposes some restrictions on the entire design or at least the exterior design of the portable terminal. Additionally, the controlling knob 13 is usually mounted to protrude from an upper portion of a side of the main body 11, taking account of a holding position of the portable terminal.

### SUMMARY OF THE INVENTION

Accordingly, an aspect of the present invention is to provide a focus controlling device for a beam projector, which improves exterior design flexibility of a portable terminal.

Another aspect of the present invention is to provide a focus controlling device for a beam projector, which improves long-term product reliability.

In accordance with an aspect of the present invention, a focus controlling device for a beam projector is provided. The focus controlling device includes a drive motor, a cam including a helical groove on an outer circumferential surface thereof, connected to the drive motor, and a projection lens barrel including a shaft that interworks with the helical groove to control focus by linearly sliding according to revolution of the cam.

The focus controlling device may further include a gear box provided coaxially with and between the drive motor and the cam to improve transmitted torque, the gear box including at least one planet gear, thus contributing to miniaturization.

The focus controlling device may further include a first elastic body provided coaxially with and between the gear box and the cam in such a way to closely contact the gear box and the cam, the first elastic body being disposed to pass through a connecting shaft between the gear box and the cam, thereby reducing a backlash and the first elastic body including a compression coil spring.

The focus controlling device may further include a second elastic body provided to be supported onto a fixture, thereby reducing a backlash, and the second elastic body including a compression coil spring.

### BRIEF DESCRIPTION OF THE DRAWINGS

The above and other aspects, features, and advantages of certain embodiments of the present invention will be more apparent from the following detailed description taken in conjunction with the accompanying drawings, in which:
FIG. 1 is a perspective view illustrating an exterior of a conventional portable terminal including a focus controlling device;
FIG. 2 is a diagram illustrating a focus controlling device of a beam projector for use in a portable terminal according to an embodiment of the present invention;
FIG. 3 is a diagram illustrating a focus controlling device of a beam projector for use in a portable terminal according to an embodiment of the present invention;
FIG. 4 is a diagram illustrating a focus controlling device of a beam projector for use in a portable terminal according to an embodiment of the present invention;
FIG. 5 is a diagram illustrating a focus controlling device of a beam projector for use in a portable terminal according to an embodiment of the present invention;
FIG. 6 is an enlarged diagram illustrating an end portion of a shaft of a projection lens barrel coupled to a helical groove of a cam of a focus controlling apparatus according to an embodiment of the present invention; and
FIG. 7 is a diagram illustrating an edge value with respect to rotation (or revolution) of a drive motor.

### DETAILED DESCRIPTION OF EMBODIMENTS OF THE INVENTION

Various embodiments of the present invention will now be described in detail with reference to the accompanying drawings. In the following description, specific details such as detailed configuration and components are merely provided to assist the overall understanding of these embodiments of the present invention. Therefore, it should be apparent to those skilled in the art that various changes and modifications of the embodiments described herein can be made without departing from the scope and spirit of the present invention. In addition, descriptions of well-known functions and constructions are omitted for clarity and conciseness..

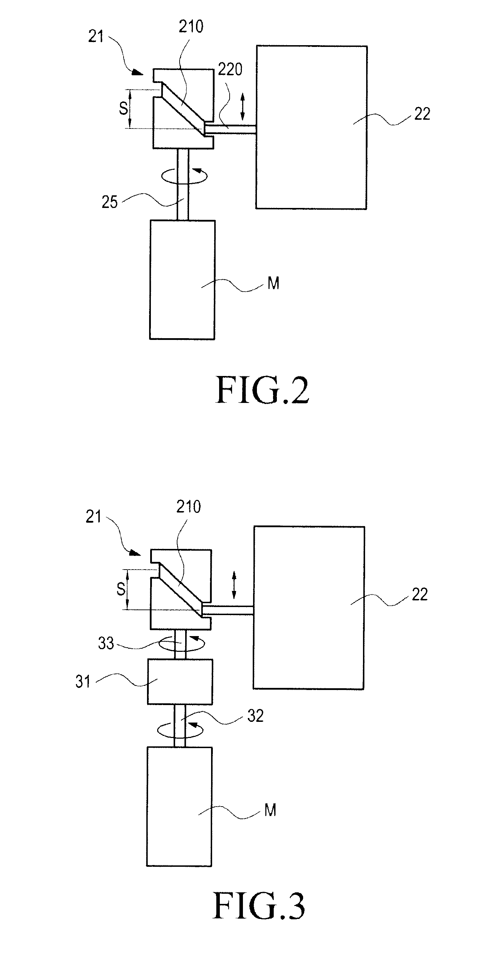

FIG. 2 is a diagram illustrating a focus controlling device of a beam projector for use in a portable terminal according to an embodiment of the present invention.

Referring to FIG. 2, a focus controlling device includes a drive motor M, a cam 21, and a projection lens barrel 22. The drive motor M and the cam 21 are connected with each other in a line along a certain direction, and the projection lens barrel 22 and the cam 21 are connected perpendicularly to each other. The drive motor M rotates a revolving shaft 25 that is directly connected to the cam 21, thereby rotating the cam 21.

The cam 21 is a cylindrical in shape and has a helical groove 210 on an outer circumferential surface thereof. When the drive motor M revolves, the cam 21 also revolves, linearly moving the projection lens barrel 22 such that a lens provided in the projection lens barrel 22 focuses on a subject.

The projection lens barrel 22 controls the focus of the lens by linearly reciprocating according to normal revolution or reverse revolution of the drive motor M. The projection lens barrel 22 includes a shaft 220 that interworks with the helical groove 210 to linearly move the projection lens barrel 22 with revolution of the cam 21. A reference numeral S denotes a distance the projection lens barrel 22 reciprocates.

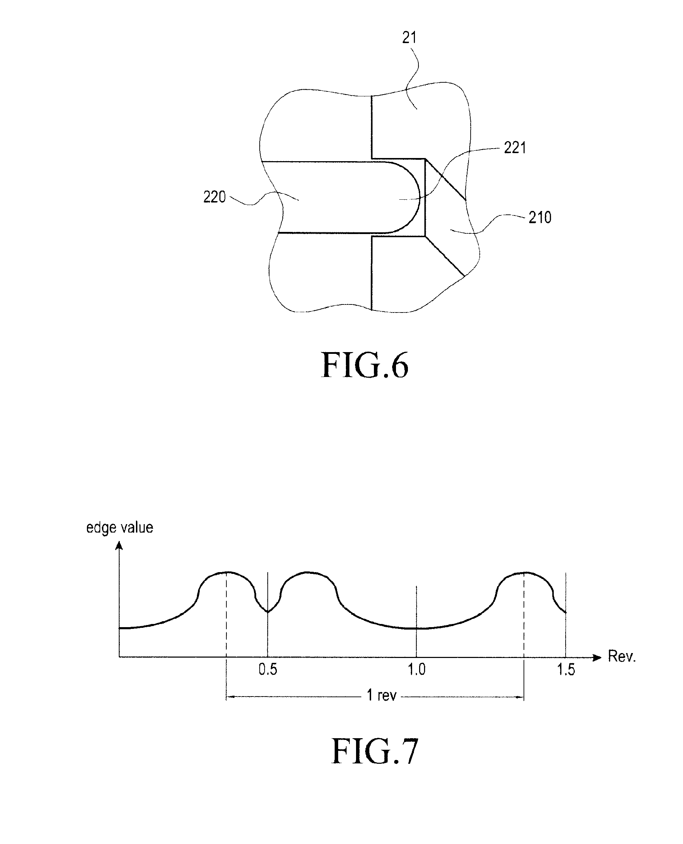

FIG. 6 is an enlarged diagram illustrating an end portion of a shaft of a projection lens barrel coupled to a helical groove of a cam of a focus controlling apparatus according to an embodiment of the present invention.

Referring to FIG. 6, an end portion 221 of the shaft 220 is inserted into the helical groove 210 to be linearly guided in parallel with the revolving shaft 25.

FIG. 3 is a diagram illustrating a focus controlling device of a beam projector for use in a portable terminal according to an embodiment of the present invention.

Referring to FIG. 3, the focus controlling device is the same as the focus controlling device illustrated in FIG. 2, except for the inclusion of a gear box 31. Therefore, a repetitive description of the same components already described for FIG. 2 will be omitted from the description of FIG. 3.

As indicated above, the focus adjusting device illustrated in FIG 3 further includes the gear box 31 between the drive motor M and the cam 21. The gear box 31 is coaxially connected with a drive motor revolving shaft 32 and a connecting shaft 33 of the cam 21, to transmit power of the drive motor M to the cam 21. As described above, the rotation of the cam 21 causes the projection lens barrel 22 move linearly, thereby controlling the focus between the lens and the subject.

The gear box 31 includes a plurality of gear arrangements (not shown), and increases torque transmitted to the cam 21 by decelerating a revolving speed transmitted from the drive motor M.

In particular, the gear box 31 includes a planet gear (not shown) for miniaturization of the focus controlling device. The gear box 31 preferably uses at least one or more planet gears, which are efficient in volume reduction, instead of a spur gear, which has a larger volume and lower mechanical reliability.

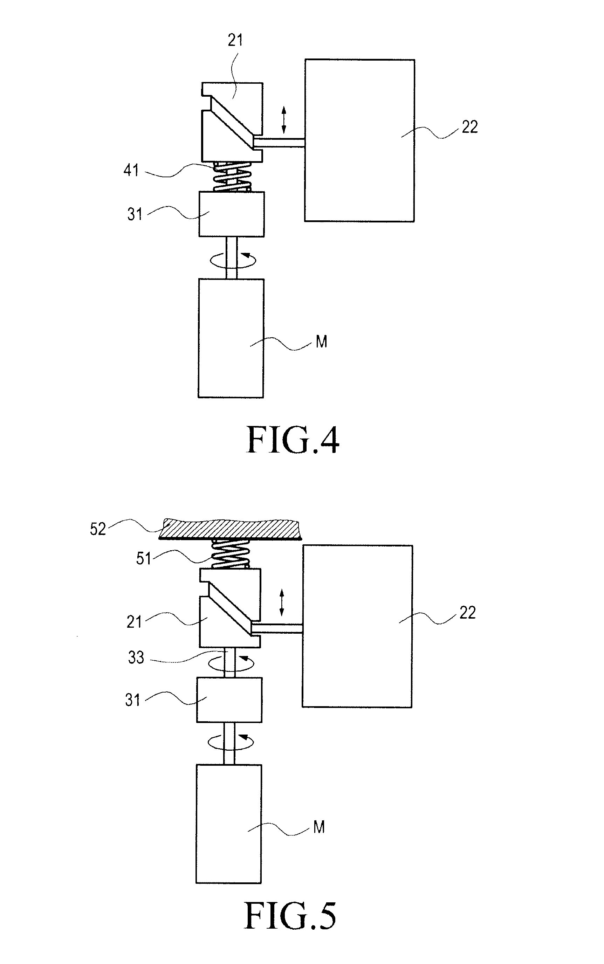

FIG. 4 is a diagram illustrating a focus controlling device of a beam projector for use in a portable terminal according to an embodiment of the present invention.

Referring to FIG. 4, the focus controlling device is the same as the focus controlling device illustrated in FIG. 3, except for the inclusion of an elastic body 41. Therefore, a repetitive description of the same components already described for FIG. 3 will be omitted from the description of FIG. 4.

As indicated above, the focus controlling device further includes the elastic body 41 between the gear box 31 and the cam 21. The elastic body 41, e.g., a compression coil spring, passes through the gear box 31 and a connecting shaft 42 of the cam 21. In particular, both ends of the elastic body 41, while closely contacting the gear box 31 and the cam 21, absorb vibrations generated during an operation of the gear box 31, thereby performing smooth power transmission.

FIG. 7 is a diagram illustrating an edge value with respect to rotation (or revolution) of a drive motor.

Referring to FIG. 7, when the cam 21 makes 0.5 of a revolution, the projection lens barrel 22 makes one stroke and thus, passes a focusing position of the subject. In such a structure, during revolution of the cam 21, controlling a backlash according to separation between the end portion 221 of the shaft 220 and the helical groove 210 is very important, and the elastic body 41 plays an important role in reducing the backlash.

When the drive motor M operates, desired torque is transmitted to the cam 21 through the gear box 31, causing movement of the projection lens barrel 22 and thus controlling the focus between the lens and the subject.

FIG. 5 is a diagram illustrating a focus controlling device of a beam projector for use in a portable terminal according to an embodiment of the present invention.

Referring to FIG. 5, the focus controlling device is the same as the focus controlling device illustrated in FIG. 3, except for the inclusion of an elastic body 51 that is supported onto a fixture 52. Therefore, a repetitive description of the same components already described for FIG. 3 will be omitted from the description of FIG. 5.

As indicated above, the focus controlling device further includes the elastic body 51 between the fixture 52 and the cam 21. The elastic body 51, e.g., a compression coil spring, is disposed between the fixture 52 and the cam 21, in the same direction as and in a line with the drive motor M, the gear box 31, and the connecting shaft 33 of the cam 21. In particular, both ends of the elastic body 51, while closely contacting the fixture 52 and the cam 21, absorb vibrations generated by revolution and power transmission during operation of the drive motor M, the gear box 31, and the cam 21, thereby helping smooth power transmission.

Referring again to FIG. 7, when the cam 21 makes 0.5 of a revolution, the projection lens barrel 22 makes one stroke, and thus, passes a focusing position of the subject. In such a structure, during revolution of the cam 21, controlling a backlash according to separation between the end portion 221 of the shaft 220 and the helical groove 210 is very important, and the elastic body 51 plays an important role in reducing the backlash.

When the drive motor M operates, desired torque is transmitted to the cam 21 through the gear box 31, causing movement of the projection lens barrel 22, thereby controlling the focus between the lens and the subject.

Referring to FIG. 6, the end portion 221 of the shaft 220 provided in the projection lens barrel 22 is a semi-spherical shape. The end portion 221 in the semi-spherical shape, while being inserted into the helical groove 210 of the cam 21, performs smooth sliding to guide the projection lens barrel 22 according to revolution of the cam 21. The semi-spherical shape of the end portion 221 contributes to improving product reliability in terms of abrasion with the cam 21 and the helical groove 210.

Such a semi-spherical shape structure of the end portion 221 of the shaft 220 can also be applied to the focus controlling devices 20, 30, 40, and 50 according to another embodiment of the present invention.

As is apparent from the foregoing description, the focus controlling device of a beam projector for use in a portable terminal according to the above-described embodiments of the present invention is an auto focus controlling device, which improves exterior design flexibility of the portable terminal, and is advantageous for miniaturization and improving long-term product reliability.

While the present invention has been shown and described with reference to certain embodiments thereof, it will be understood by those skilled in the art that various changes in form and details may be made therein without departing from the spirit and scope of the present invention as defined by the appended claims and their equivalents.

## Claims

1. A focus controlling device for a beam projector, the focus controlling device comprising:
a drive motor (M);
a cam (21) including a helical groove (210) on an outer circumferential surface thereof, connected to the drive motor (M); and
a projection lens barrel (22) including a shaft (220) that interworks with the helical groove (210) to control focus by linearly sliding according to rotation of the cam (21).

2. The focus controlling device of claim 1, **characterized in that** an end portion (22 1 ) of the shaft (220) is inserted into the helical groove (210), such that the end portion (221) is guided to linearly slide in parallel with a rotating shaft of the cam (21).

3. The focus controlling device of claim 2, **characterized in that** the end portion (221) of the shaft (220) is formed in a semi-spherical shape.

4. The focus controlling device of claim 1, further comprising a gear box (31) provided coaxially with and between the drive motor (M) and the cam (21) to improve transmitted torque, the gear box (31) including at least one planet gear.

5. The focus controlling device of claim 4, further comprising a first elastic body (41) provided coaxially with and between the gear box (31) and the cam (21), in contact the gear box (31) and the cam (21), the first elastic body (4 1 ) passing through a connecting shaft (42) between the gear box (3 1 ) and the cam (21), thereby reducing a backlash,
wherein the first elastic body (41) includes a compression coil spring.

6. The focus controlling device of claim 1 or 5, further comprising a second elastic body (51) supported on a fixture (52), thereby reducing a backlash,
wherein the second elastic body (51) includes a compression coil spring.

7. The focus controlling device of claim 1, **characterized in that** the cam (21) is coaxially connected with the drive motor (M) and the shaft (220) of the projection lens barrel (22) is connected perpendicularly with the cam (21).
